# EUROPEAN PATENT SPECIFICATION

(11) **EP 4 149 053 B1**
(45) Date of publication and mention of the grant of the patent: **07.02.2024**
(21) Application number: 22194289.9
(22) Date of filing: 07.09.2022
(51) Int. Cl.: H04L 9/40, H04W 12/084, H04W 12/61

(54) **AUTHORIZATION PROCESSING METHOD AND APPARATUS, AND STORAGE MEDIUM**
AUTORISIERUNGSVERARBEITUNGSVERFAHREN UND -VORRICHTUNG UND SPEICHERMEDIUM
PROCÉDÉ ET APPAREIL DE TRAITEMENT D'AUTORISATION, ET SUPPORT DE STOCKAGE

(30) Priority: 10.09.2021 CN 202111062394
(43) Date of publication of application: 15.03.2023
(73) Proprietor: Apollo Intelligent Connectivity (Beijing) Technology Co., Ltd., Beijing 100176 (CN)
(72) Inventor: ZHANG, Jianjun, BEIJING, 100176 (CN); CHEN, Zhen, BEIJING, 100176 (CN)
(74) Representative: Deambrogi, Edgardo

(56) References cited:
- CN-A- 103 795 692
- CN-A- 110 324 276
- CN-A- 111 200 593

## Description

### TECHNICAL FIELD

The present disclosure relates to the field of computer technology, in particular, to vehicle-to-everything and intelligent cockpit technology and, specifically, to an authorization processing method and apparatus, and a storage medium.

### BACKGROUND

At present, open platforms (such as a voice open platform) support users or third-party organizations to develop their own applications on the open platforms. If a user wants to use the applications developed by the third-party organizations, the user needs to perform independent login authorization for each of the applications. For example, if a third-party organization develops 10 applications on an open platform, the user must perform login authorization 10 times to use these 10 applications. Apparently, the existing login authorization processing is cumbersome, and the user experience is poor. Therefore, an improvement is urgently needed. Further relevant technologies are also known from BEIJING NICAIFU COMPUTER TECH CO LTD: CN111200593A, 26 May 2020 (2020-05-26); CHINA TELECOM CO LTD: CN103795692A, 14 May 2014 (2014-05-14); and TENCENT TECH SHENZHEN CO LTD: CN 110324276A, 11 October 2019 (2019-10-11).

### SUMMARY

The present disclosure provides an authorization processing method and apparatus, and a storage medium. The features of the method and apparatus according to the present invention are defined in the independent claims. Further improvements are provided in the dependent claims.

According to an aspect of the present disclosure, an authorization processing method is provided. The method includes the steps below.

A generic credential of a target organization is acquired. The generic credential is generated according to authorization information of a target application.

At least two applications developed by the target organization on an open platform are controlled to get authorized according to the generic credential. The at least two applications include the target application.

According to another aspect of the present disclosure, an authorization processing apparatus is provided. The apparatus includes a generic credential acquisition module and an authorization processing module.

The generic credential acquisition module is configured to acquire a generic credential of a target organization. The generic credential is generated according to authorization information of the target application.

The authorization processing module is configured to control at least two applications developed by the target organization on the open platform to get authorized according to the generic credential. The at least two applications include the target application.

According to another aspect of the present disclosure, an electronic device is provided. The electronic device includes at least one processor and a memory communicatively connected to the at least one processor.

The memory stores instructions executable by the at least one processor, where the instructions, when executed by the at least one processor, cause the at least one processor to execute the authorization processing method according to any embodiment of the present disclosure.

According to another aspect of the present disclosure, a non-transitory computer-readable storage medium is provided. The storage medium stores computer instructions, where the computer instructions are configured to cause a computer to execute the authorization processing method according to any embodiment of the present disclosure.

According to another aspect of the present disclosure, a computer program product is provided. The computer program product includes a computer program. The computer program, when executed by a processor, implements the authorization processing method according to any embodiment of the present disclosure.

According to the technical scheme of the present disclosure, the issue of poor user experience caused by that a user needs to perform independent login authorization for each of applications of a third-party organization on an open platform to use the applications. Therefore, the operations of the user are simplified, and the user experience is improved.

It is to be understood that the content described in this part is neither intended to identify key or important features of the embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the schemes and not to limit the present disclosure.
FIG. 1 is a flowchart of an authorization processing method according to an embodiment of the present disclosure.
FIG. 2 is a flowchart of another authorization processing method according to an embodiment of the present disclosure.
FIG. 3 is a flowchart of another authorization processing method according to an embodiment of the present disclosure.
FIG. 4 is a flowchart of another authorization processing method according to an embodiment of the present disclosure.
FIG. 5 is a flowchart of another authorization processing method according to an embodiment of the present disclosure.
FIG. 6 is a signaling diagram of an authorization processing process according to an embodiment of the present disclosure.
FIG. 7 is a diagram illustrating the structure of an authorization processing apparatus according to an embodiment of the present disclosure.
FIG. 8 is a block diagram of an electronic device for performing an authorization processing method according to an embodiment of the present disclosure.

### DETAILED DESCRIPTION

Exemplary embodiments of the present disclosure, including details of embodiments of the present disclosure, are described hereinafter in conjunction with the drawings to facilitate understanding. The exemplary embodiments are merely illustrative. Therefore, it is to be appreciated by those of ordinary skill in the art that various changes and modifications may be made to the embodiments described herein without departing from the scope of the present disclosure. Similarly, description of well-known functions and constructions is omitted hereinafter for clarity and conciseness.

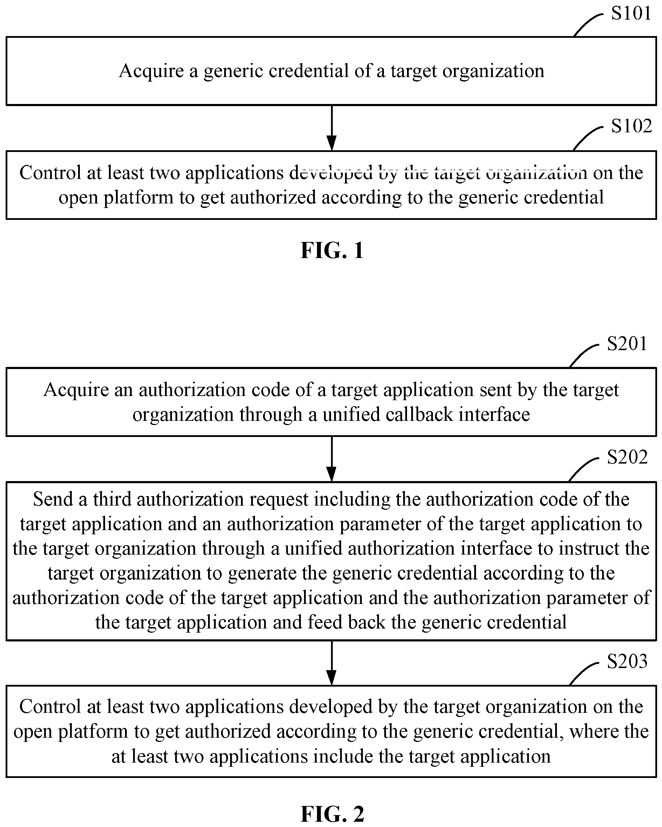

FIG. 1 is a flowchart of an authorization processing method according to an embodiment of the present disclosure. This embodiment of the present disclosure is applicable to a case of how to perform authorization processing, especially to a case of how to perform authorization processing on the basis that an open platform supports the Oauth2.0 authorization protocol, so that a user can use part or even all of the applications developed by a third-party organization on the open platform by performing login authorization once. This method is executed by an authorization processing apparatus. This apparatus may be performed by software and/or hardware and may be integrated into an electronic device with authorization processing functions, such as an intermediate platform. The intermediate platform is a device independent of the open platform and the third-party organization. As shown in FIG. 1, the authorization processing method according to this embodiment includes the steps below.

In S101, a generic credential of a target organization is acquired.

In this embodiment, the target organization is any third-party organization that develops at least two applications on an open platform. The generic credential is a key for accessing the target organization and is specifically a generic key for accessing the services supported by the target organization. A target application is any one of at least two applications developed by the target organization on the open platform. Further, the target application refers to an application that any user (such as a target user) who has registered on the open platform wants to use.

In an embodiment, for any user who has registered on the open platform, if this user needs to use the target application developed by the target organization on the open platform, this user may fill in a username and password on an authorization page provided by the target organization for the target application and click to log in. Then the target organization is triggered to interact with the intermediate platform based on the Oauth2.0 authorization protocol, generates the generic credential of the target organization for this user, and feeds back the generic credential to the intermediate platform. Then the intermediate platform acquires the generic credential of the target organization for this user.

In an embodiment, the generic credential is generated by the target organization according to authorization information of the target application, in an embodiment, the authorization information of the target application is coded to obtain the generic credential. Alternatively, the generic credential is generated according to the authorization information of the target application, user account information, a target organization identifier (ID), a current timestamp, and a target application identifier. The authorization information includes an authorization code and an authorization parameter.

Further, to improve the security of the information in the interaction process, an encryption policy may be used for encrypting the interaction information. For example, asymmetric encryption may be used. Specifically, the target organization may use a public key of the intermediate platform to encrypt the generic credential. Then the intermediate platform may use its own private key to decrypt the encrypted generic credential to acquire the generic credential for accessing the target organization.

In S102, at least two applications developed by the target organization on the open platform are controlled to get authorized according to the generic credential.

In an embodiment, the at least two applications include the target application. After the intermediate platform acquires the generic credential for accessing the target organization, the intermediate platform interacts with the open platform based on the Oauth2.0 authorization protocol to implement the authorization of the open platform by the at least two applications that are developed by the target organization on the open platform.

In an implementation, the intermediate platform may select, from the at least two applications developed by the target organization on the open platform, an application that uses the generic credential to perform an authorization service according to authorization configuration information of the target organization. The generic credential is used for controlling each selected application to get authorized. That is, the generic credential is used for generating an access token for the user to access each selected application through the open platform.

In an embodiment, for each application, the intermediate platform generates the access token of this application to the user based on the generic credential and combined with the related data of this application and the related data of the user and transmits the access token to the open platform. In this manner, when the user needs to use this application, the user accesses the service corresponding to this application in the target organization based on the access token of this application through the open platform. The access token of the application is imperceptible to the user and stored in the open platform, that is, the open platform may store the access token of the application in association with the user. Specifically, the access token of the application may be stored in association with the user's account information on the open platform.

It is to be noted that at present, if the user wants to use each of applications developed by the third-party organization, the user needs to perform independent login authorization for each of the applications. For example, if a third-party organization develops 10 applications on the open platform, the user must perform login authorization 10 times to use these 10 applications, that is, the user must fill in the username and password 10 times. However, in this embodiment, the user only needs to log in once to use part or even all of the applications developed by the third-party organization on the open platform. For example, the third-party organization A develops three applications on the open platform, such as a smart home application, a custom game application, and a store application. If the user wants to use the smart home application, the user may fill in information such as the username and password on the authorization page of the smart home application and click to log in. Then the third-party organization A is triggered to interact with the intermediate platform based on the Oauth2.0 authorization protocol to generate the generic credential and feeds back the generic credential to the intermediate platform. The intermediate platform may control the smart home application, the custom game application, and the store application to get authorized for the open platform based on the acquired generic credential. Thus, the user directly uses the store application and the custom game application of the third-party organization A subsequently without filling in the username and password.

In the technical scheme provided by this embodiment of the present disclosure, the intermediate platform interacts with the target organization to acquire the generic credential for accessing the target organization. Then, based on the generic credential, the open platform is authorized to access part or even all of the applications developed by the target organization on the open platform. In the preceding scheme, the generic credential is introduced to directly control the authorization of multiple applications for the open platform and the user does not need to fill in the username and password multiple times. Thus, the issue of poor user experience caused by that a user needs to perform independent login authorization on each of applications of the third-party organization on the open platform to use the applications. In the case where the independence between different applications on the open platform is satisfied, the effect of batch authorization of multiple applications with one login is implemented, and thus the user experience is improved.

It is to be noted that different users who have registered on the open platform are independent from each other when they access the same application of the third-party organization on the open platform, that is, the authorization of the same application to different users is independent. Further, in this embodiment, the generic credential is essentially the generic credential of the target organization to the target user, that is, the generic credential is essentially generated according to the authorization information of the target application to the target user. Then, at least two applications developed by the target organization on the open platform are controlled to get authorized according to the generic credential. Essentially, according to the generic credential, the target user is authorized to access the at least two applications of the target organization through the open platform. In this manner, the target user can access part or even all of the applications in the target organization through the open platform simply after performing login authorization on one application of the target organization on the open platform.

FIG. 2 is a flowchart of another authorization processing method according to an embodiment of the present disclosure. Based on the preceding embodiment, this embodiment further explains in detail how to "acquire the generic credential of the target organization". As shown in FIG. 2, the authorization processing method according to this embodiment may include the steps below.

In S201, an authorization code of a target application sent by a target organization is acquired through a unified callback interface.

The unified callback interface is an external interface provided by the intermediate platform. The unified callback interface is also referred to as a unified callback address and is an external unified interface implemented by using a virtual Internet protocol (IP) address. Further, the unified callback interface is a unified interface for any third-party organization to call back to the intermediate platform, that is, an interface for any third-party organization to transmit information to the intermediate platform.

The authorization code of the target application is a credential used by the target organization to allow the open platform to access one or some services of the target organization to which the target application belongs. Further, based on the Oauth2.0 authorization protocol, in this embodiment, the authorization code of the target application is a necessary key for the intermediate platform to obtain the generic credential from the target organization.

Specifically, the user may fill in the information such as the username and password on the authorization page of the target application on the open platform and click to log in. Then the open platform is triggered to send an authorization code request including the target application identifier and a user identifier to the target organization. The target organization generates the authorization code of the target application to the user and transmits, through the unified callback interface configured by the intermediate platform, the authorization code to the intermediate platform. Further, the unified callback interface may be the unified callback address and may specifically be an address of a set web page specified by the intermediate platform. Then the target organization may add the authorization code to a fixed field of the address of the set web page and jump to the set web page. Then the intermediate platform acquires the authorization code of the target application to the user.

The authorization code may be generated in the following manners: the target organization acquires the user account information according to the user identifier; and the authorization code of the target application to the user is generated according to the target application identifier and the user account information. The target application identifier is used for uniquely identifying the target application and may be represented by a string, such as the target application ID. The user identifier is used for uniquely identifying the user. The user account information may include the user name and password used by the user to log in to an application.

In S202, a third authorization request including the authorization code of the target application and an authorization parameter of the target application is sent to the target organization through a unified authorization interface to instruct the target organization to generate the generic credential according to the authorization code of the target application and the authorization parameter of the target application and feed back the generic credential.

Correspondingly, the unified authorization interface is also an interface provided by the intermediate platform externally and may be referred to as a unified authorization address. The unified authorization interface may be an external unified interface implemented by using a virtual IP address. Further, the unified authorization interface may specifically be an interface between any third-party organization and the intermediate platform, as well as an interface between the intermediate platform and the open platform to authorize a service.

In an embodiment, after the intermediate platform acquires the authorization code of the target organization, the intermediate platform may query a pre-established database according to the target application identifier to acquire the authorization parameter of the target application. The database stores related parameters of all applications on the open platform. Further, the related parameter of an application may be stored in the database in the form of a key-value pair (that is, key-value). For example, an application identifier may be used as a key, and the authorization parameter of the application may be used as a value. The authorization parameter of the application is a parameter configured based on the Oauth2.0 authorization protocol when the third-party organization develops the application on the open platform and may include, but is not limited to, the application ID (that is, client_id), an application key (client secret), and an authorization scope (scope). Further, authorization parameters of different applications may be different.

In an embodiment, the intermediate platform packages the authorization code of the target application and the authorization parameter of the target application based on a data format of a service authorization request specified in the Oauth2.0 authorization protocol to obtain the third authorization request and transmit the third authorization request to the target organization through the unified authorization interface. The target organization compares the locally stored authorization parameter of the target application with the authorization parameter of the target application transmitted by the intermediate platform and compares the locally stored authorization code of the target application with the authorization code of the target application transmitted by the intermediate platform. If these authorization parameters are consistent and these authorization codes are consistent, the target organization generates the generic credential to the user and transmits the generic credential to the intermediate platform through the unified authorization interface. It is to be noted that the third authorization request may or may not include the user identifier. Since the authorization code of the target application is essentially the authorization code of the target application to the target user, even if the third authorization request does not include the user identifier, the target organization may also search for the user according to the authorization code.

It is to be noted that no matter which application in the target organization is operated by the user to trigger the generation of the generic credential, the intermediate platform may use the acquired generic credential as a basic key for accessing some or all of the services in the target organization based on the authorization configuration information of the target organization. That is, the generic credential is a key for accessing a music service in the target organization and further a key for accessing a game service in the target organization.

In S203, at least two applications developed by the target organization on the open platform are controlled to get authorized according to the generic credential. The at least two applications include the target application.

In the technical scheme provided by this embodiment of the present disclosure, based on the Oauth2.0 authorization protocol, the intermediate platform interacts with the target organization through the unified callback interface and the unified authorization interface to acquire the generic credential to avoid snooping of the generic credential during network transmission and malicious access of the services in the target organization. Thus, the security is improved, and based on the generic credential, the open platform is authorized to access part or even all of the applications developed by the target organization on the open platform.

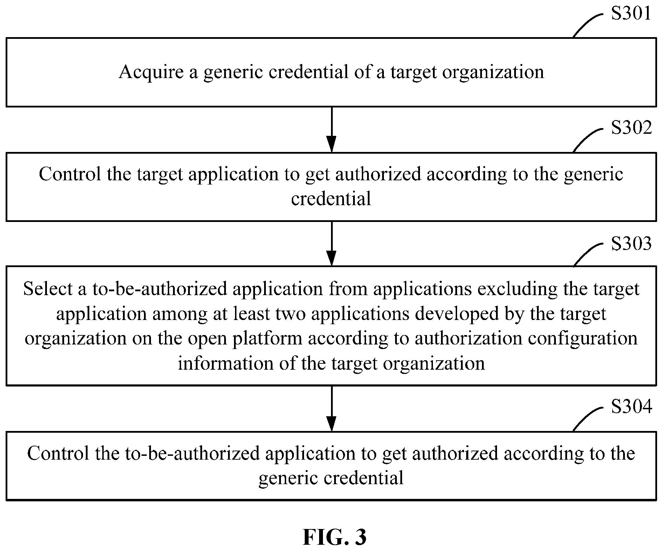

FIG. 3 is a flowchart of another authorization processing method according to an embodiment of the present disclosure. Based on any one of the preceding embodiments, this embodiment further explains in detail how to "control at least two applications developed by the target organization on the open platform to get authorized according to the generic credential". As shown in FIG. 3, the authorization processing method according to this embodiment may include the steps below.

In S301, a generic credential of a target organization is acquired.

The generic credential is generated by the target organization according to authorization information of a target application.

In S302, the target application is controlled to get authorized according to the generic credential.

In this embodiment, the target application may be any one of at least two applications developed by the target organization on the open platform. The target application refers to the application that any user who has registered on the open platform wants to use, that is, the application involved in executing the triggering operation of S301 in which the generic credential for accessing the target organization is acquired.

In an implementation, the intermediate platform may generate the access token of the target application (that is, the access token for the user to access the service corresponding to the target application through the open platform) according to the generic credential, the target application identifier, and the user identifier and transmit the access token to the open platform to enable the open platform to access the service corresponding to the target application in the target organization based on the access token of the target application. Thus, the open platform is authorized to access the target application.

In another implementation, based on the Oauth2.0 authorization protocol, the intermediate platform may interact with the open platform and may control the target application to get authorized according to the interaction result and the generic credential.

In S303, a to-be-authorized application is selected from applications excluding the target application among at least two applications developed by the target organization on the open platform according to authorization configuration information of the target organization.

In this embodiment, the authorization configuration information is related configuration information of authorization processing of an application developed by the target organization on the open platform. Optionally, the authorization configuration information may include an application identifier capable of using the generic credential to get authorized or may include an application identifier having the same authorization processing process.

In an implementation, after the intermediate platform controls the target application to get authorized, the intermediate platform may identify whether the target organization has unauthorized applications in other applications on the open platform. If the intermediate platform identifies that the target organization has unauthorized applications in other applications on the open platform, an application having the same authorization processing process as the authorization processing process of the target application is selected from the unauthorized applications according to the authorization configuration information of the target organization, and this application is used as a to-be-authorized application. The to-be-authorized application is an application that does not authorize the user to access the service of this application through the open platform.

In another implementation, the intermediate platform may also acquire user's interest data according to the user identifier and then select the to-be-authorized application from other applications according to the authorization configuration information of the target organization and the user's interest data. For example, an application having the same authorization processing process as the authorization processing process of the target application is selected from the unauthorized applications of other applications according to the authorization configuration information. The to-be-authorized application is determined from the selected applications based on the interest data. It is to be understood that in combination with the user's interest data, the open platform may be authorized to access only the application that the user is interested in. Thus, the intelligence degree of authorization processing is further increased.

In S304, the to-be-authorized application is controlled to get authorized according to the generic credential.

In an implementation, for each to-be-authorized application, the intermediate platform may generate the access token of this application to the user according to the generic credential, this application identifier, and the user identifier and transmit the access token to the open platform to enable the user to access the service corresponding to this application in the target organization based on the access token of this application through the open platform. Thus, the open platform is authorized to access this application.

Optionally, the intermediate platform may authorize to-be-authorized applications in sequence according to the development time sequence of all the to-be-authorized applications on the open platform.

Further, to improve the efficiency of the authorization processing, the intermediate platform may allocate multiple threads according to the number of to-be-authorized applications and concurrently process the authorization operations of the to-be-authorized applications.

In another implementation, to ensure the normal operation of other services (such as data access) in the open platform, the intermediate platform may determine authorization time according to the valid time of the generic credential and the historical access record of the open platform. The to-be-authorized application is controlled to get authorized according to the authorization time and the generic credential. The valid time of the generic credential may be a time limit specified by the target organization that the generic credential can be used, for example, the valid time may be before Aug. 1, 2021. The authorization time is time when the to-be-authorized application is authorized.

Specifically, the intermediate platform may determine a time period in which the amount of access of the open platform is relatively small according to the historical access record of the open platform. The intermediate platform determines the authorization time according to the valid time of the generic credential, the access status of the intermediate platform, and the determined time period. At the authorization time, the to-be-authorized application gets authorized for the open platform according to the generic credential.

It is to be noted that in this embodiment, the authorization time is determined through the introduction of the historical access record of the open platform and the valid time of the generic credential; and when the current time reaches the authorization time, the to-be-authorized application is controlled to get authorized. In this manner, in the case where the to-be-authorized application gets authorized for the open platform, the normal operation of other services in the open platform can be ensured.

In the technical scheme provided by this embodiment of the present disclosure, the authorization configuration information of the target organization is introduced, and based on the authorization configuration information of the target organization, some applications developed by the target organization on the open platform may be flexibly selected to get authorized. Thus, in the case where the effect of batch authorization of multiple applications with one login is implemented, the flexibility of the scheme is increased.

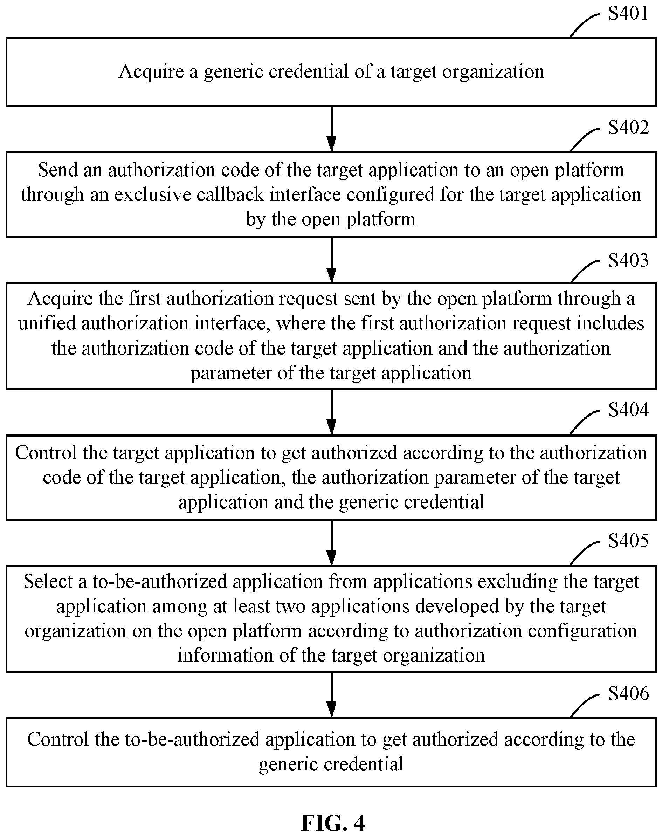

FIG. 4 is a flowchart of another authorization processing method according to an embodiment of the present disclosure. On the basis of the preceding embodiments, the target application gets authorized based on the Oauth2.0 authorization protocol. As shown in FIG. 4, the authorization processing method according to this embodiment may include the steps below.

In S401, a generic credential of a target organization is acquired.

The generic credential is generated by the target organization according to authorization information of a target application.

In S402, an authorization code of the target application is sent to an open platform through an exclusive callback interface configured for the target application by the open platform.

In this embodiment, the exclusive callback interface is also referred to as a unique callback address and is an external interface implemented by using a virtual IP address. Specifically, the exclusive callback interface is an address configured for the target application by the open platform to call back to the open platform and the interface is unique.

Specifically, after the generic credential for accessing the target organization is acquired, the intermediate platform sends the authorization code of the target application to the open platform through the exclusive callback interface configured for the target application by the open platform. After the open platform acquires the authorization code of the target application, the open platform acquires an authorization parameter of the target application and package the authorization code of the target application and the authorization parameter of the target application based on the data format of the service authorization request specified in the Oauth2.0 authorization protocol to obtain a first authorization request and transmit the first authorization request to the intermediate platform through a unified authorization interface. The open platform acquires the authorization parameter of the target application according to the target application identifier. The open platform acquires the target application identifier from the intermediate platform.

Further, in this embodiment, to reduce the false probability of the intermediate platform, when the intermediate platform sends the authorization code of the target application to the open platform, the intermediate platform may also send the generation timestamp of the authorization code to the open platform. Then, after the open platform receives the generation timestamp of the authorization code, the open platform may compare the generation timestamp with the current timestamp. If the difference between the generation timestamp and the current timestamp is within a set range, the open platform performs an operation process of sending the first authorization request to the intermediate platform. Otherwise, the open platform may send an invalidation notice of the authorization code to the intermediate platform. The generation timestamp is time when the target organization generates the authorization code of the target application.

In S403, the first authorization request sent by the open platform is acquired through the unified authorization interface, where the first authorization request includes the authorization code of the target application and the authorization parameter of the target application.

Specifically, the intermediate platform acquires, through the unified authorization interface, the first authorization request that is sent by the open platform and includes the authorization code of the target application and the authorization parameter of the target application.

In S404, the target application is controlled to get authorized according to the authorization code of the target application, the authorization parameter of the target application and the generic credential.

In an embodiment, after the intermediate platform acquires the first authorization request, the intermediate platform extracts the authorization code of the target application and the authorization parameter of the target application from the first authorization request. The intermediate platform compares the locally stored authorization parameter of the target application with the authorization parameter of the target application transmitted by the open platform and compares the locally stored authorization code of the target application with the authorization code of the target application transmitted by the open platform. If these authorization parameters are consistent and these authorization codes are consistent, the intermediate platform generates the access token of the target application according to a generic token, the target application identifier, the authorization code of the target application and the user identifier and transmit the access token of the target application to the open platform through the unified authorization interface to enable the open platform to access the service corresponding to the target application in the target organization based on the access token of the target application. Thus, the authorization operation of the target application on the open platform is completed.

In S405, a to-be-authorized application is selected from applications excluding the target application among at least two applications developed by the target organization on the open platform according to authorization configuration information of the target organization.

In S406, the to-be-authorized application is controlled to get authorized according to the generic credential.

In the technical scheme provided by this embodiment of the present disclosure, based on the Oauth2.0 authorization protocol, the intermediate platform interacts with the open platform through the unified authorization interface and the exclusive callback interface configured for the target application by the open platform to enable the target application to get authorized for the open platform. In this manner, the snooping of the generic credential and the access token during the network transmission and the malicious access of the services corresponding to the target application in the target organization are avoided. Thus, the security is improved.

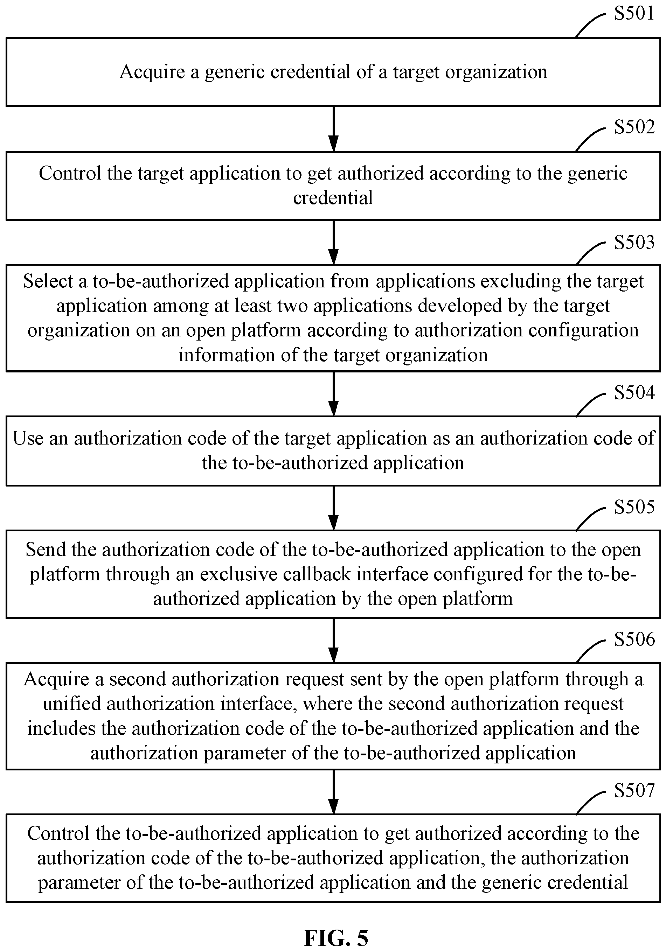

FIG. 5 is a flowchart of another authorization processing method according to an embodiment of the present disclosure. On the basis of the preceding embodiments, the to-be-authorized application gets authorized based on the Oauth2.0 authorization protocol. As shown in FIG. 5, the authorization processing method according to this embodiment may include the steps below.

In S501, a generic credential of a target organization is acquired.

The generic credential is generated by the target organization according to authorization information of a target application.

In S502, the target application is controlled to get authorized according to the generic credential.

In S503, a to-be-authorized application is selected from applications excluding the target application among at least two applications developed by the target organization on an open platform according to authorization configuration information of the target organization.

In S504, an authorization code of the target application is used as an authorization code of the to-be-authorized application.

In this embodiment, the number of to-be-authorized applications may be one or more. Optionally, for each to-be-authorized application, an intermediate platform may use the authorization code of the target application as the authorization code of the to-be-authorized application.

In S505, the authorization code of the to-be-authorized application is sent to the open platform through the exclusive callback interface configured for the to-be-authorized application by the open platform.

Similar to the exclusive callback interface of the target application, each to-be-authorized application has an exclusive callback interface. Further, the exclusive callback interface of the to-be-authorized application may also be referred to as a unique callback address and may be an external interface implemented by using a virtual IP address. Specifically, the exclusive callback interface of the to-be-authorized application may be an address configured for the to-be-authorized application by the open platform to call back to the open platform.

Specifically, the intermediate platform may send the authorization code of the to-be-authorized application to the open platform through the exclusive callback interface configured for the to-be-authorized application by the open platform. After the open platform acquires the authorization code of the to-be-authorized application, the open platform may acquire the authorization parameter of the to-be-authorized application and package the authorization code of the target application and the authorization parameter of the to-be-authorized application based on the data format of the service authorization request specified in the Oauth2.0 authorization protocol to obtain a second authorization request and transmit the second authorization request to the intermediate platform through the unified authorization interface. The open platform may acquire the authorization parameter of the to-be-authorized application according to the to-be-authorized application identifier. The open platform may acquire the to-be-authorized application identifier from the intermediate platform.

In S506, the second authorization request sent by the open platform is acquired through the unified authorization interface, where the second authorization request includes the authorization code of the to-be-authorized application and the authorization parameter of the to-be-authorized application.

Specifically, the intermediate platform may acquire, through the unified authorization interface, the second authorization request that is sent by the open platform and includes the authorization code of the to-be-authorized application and the authorization parameter of the to-be-authorized application.

In S507, the to-be-authorized application is controlled to get authorized according to the authorization code of the to-be-authorized application, the authorization parameter of the to-be-authorized application and the generic credential.

Optionally, after the intermediate platform acquires the second authorization request, the intermediate platform may extract the authorization code of the to-be-authorized application and the authorization parameter of the to-be-authorized application from the second authorization request. The intermediate platform may compare the locally stored authorization parameter of the to-be-authorized application with the authorization parameter of the to-be-authorized application transmitted by the open platform and compare the locally stored authorization code of the to-be-authorized application with the authorization code of the to-be-authorized application transmitted by the open platform. If these authorization parameters are consistent and these authorization codes are consistent, the intermediate platform may generate the access token of the to-be-authorized application to the user according to the generic token, a to-be-authorized application identifier, the authorization code of the to-be-authorized application and the user identifier and transmit the access token of the to-be-authorized application to the open platform through the unified authorization interface to enable the open platform to access the service corresponding to the to-be-authorized application in the target organization based on the access token of the to-be-authorized application. Thus, the authorization operation of the to-be-authorized application on the open platform is completed.

It is to be noted that no matter the number of to-be-authorized applications is one or more, for any to-be-authorized application, this to-be-authorized application may get authorized through steps S504 to S507.

In the technical scheme provided by this embodiment of the present disclosure, based on the Oauth2.0 authorization protocol, the intermediate platform interacts with the open platform through the unified authorization interface and the exclusive callback interface configured for the to-be-authorized application by the open platform to enable the to-be-authorized application to get authorized for the open platform. In this manner, the snooping of the generic credential and the access token during the network transmission and the malicious access of the services corresponding to the to-be-authorized application in the target organization are avoided. Thus, the security is improved.

For example, based on any one of the preceding embodiments, after the generic token for accessing the target organization is acquired, the generic credential may also be used to control applications in another organization to get authorized. For example, the intermediate platform may select a similar application from another organization according to the authorization configuration information of the target organization and/or the authorization configuration information of another organization. The similar application is controlled to get authorized according to the generic credential.

In this embodiment, the similar application is an application that is developed by another organization on the open platform and has the same authorization processing process as the authorization processing process of the application developed by the target organization on the open platform. Further, the similar application is specifically an application in another organization that gets authorized by using the generic certificate for accessing the target organization.

Specifically, the intermediate platform may identify whether the authorization configuration information of the target organization includes the application identifier of another organization. If the authorization configuration information of the target organization includes the application identifier of another organization, it is identified whether the included application identifier of another organization is unauthorized. If the included application identifier of another organization is unauthorized, the application corresponding to the application identifier of another organization is used as the similar application. Then the similar application is controlled to get authorized by using the generic credential, that is, the generic credential is used for generating the access token of the similar application to the open platform.

Alternatively, the intermediate platform may identify whether the authorization configuration information of another organization includes the application identifier of an application that is in the target organization and can use the generic certificate to get authorized. If the authorization configuration information of another organization includes the application identifier of the application that is in the target organization and can use the generic certificate to get authorized, in applications of another organization, an application having the same authorization processing process as the authorization processing process of the included application of the target organization is used as the similar application. Then the similar application is controlled to get authorized by using the generic credential.

Alternatively, the intermediate platform may identify the authorization configuration information of the target organization and the authorization configuration information of another organization at the same time and then select the similar application from another organization according to the identification result. Then the similar application is controlled to get authorized by using the generic credential.

It is to be noted that the process of controlling, according to the generic credential in this embodiment, the similar application to get authorized is similar to the process of controlling, according to the generic credential in the preceding embodiment, the to-be-authorized application to get authorized, and the details are not repeated here.

It is to be noted that according to this embodiment, not only authorization sharing for different applications in the same organization but also authorization sharing for different applications in different organizations can be achieved. Thus, the use scope of the scheme is further widened, and the user experience is improved.

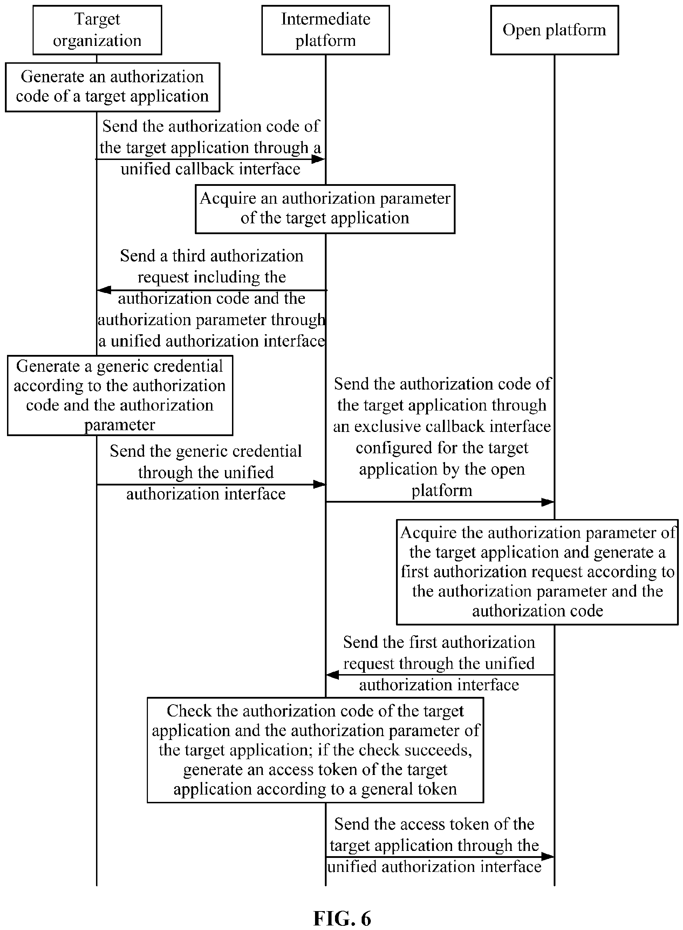

This embodiment provides a preferred example on the basis of the preceding embodiments. Since the logic for controlling the target application to get authorized is the same as the logic for controlling the to-be-authorized application to get authorized, this embodiment describes in detail by using an example in which the target application gets authorized for the open platform. As shown in FIG. 6, only the whole logic that the intermediate platform acquires the generic credential and controls the target application to get authorized is shown. With reference to FIG. 6, the whole authorization processing process is described below.

For any user (such as the target user) who has registered on the open platform, if the target user needs to use any application (such as the target application) developed by the target organization on the open platform, the target user may fill in the username and password on the authorization page provided by the target organization to the target application and click to log in. Then the open platform is triggered to send an authorization code request including a target application identifier and a target user identifier to the target organization. The target organization generates the authorization code of the target application to the target user and transmits, through the unified callback interface, the authorization code to the intermediate platform configured by the intermediate platform.

The intermediate platform acquires the authorization parameter of the target organization and sends the third authorization request including the authorization code of the target application and the authorization parameter of the target application to the target organization through the unified authorization interface. The target organization acquires the authorization code of the target application and the authorization parameter of the target application from the third authorization request and generates the generic credential to the target user according to the authorization code of the target application and the authorization parameter of the target application and feeds back the generic credential.

The intermediate platform acquires the generic credential of the target organization for the target user and sends the authorization code of the target application to the open platform through the exclusive callback interface configured for the target application by the open platform. After the open platform acquires the authorization code of the target application, the open platform may acquire the authorization parameter of the target application and package the authorization code of the target application and the authorization parameter of the target application based on the data format of the service authorization request specified in the Oauth2.0 authorization protocol to obtain the first authorization request and transmit the first authorization request to the intermediate platform through the unified authorization interface.

After the intermediate platform acquires the first authorization request, the intermediate platform may extract the authorization code of the target application and the authorization parameter of the target application from the first authorization request. The acquired authorization code of the target application and the obtained authorization parameter of the target application may be checked. If the check succeeds, the access token of the target application enabling the target user to access the target application through the open platform is generated according to the generic token, the target application identifier, the authorization code of the target application and the target user identifier The generated access token is transmitted to the open platform through the unified authorization interface to enable the open platform to access the service corresponding to the target application in the target organization based on the access token of the target application. Thus, the authorization operation of the target application is completed.

For example, after the intermediate platform completes the authorization of the target application, the intermediate platform may control unauthorized applications in the target organization to get authorized according to the generic credential and further control an unauthorized application in the target application having the same authorization processing process as the authorization processing process of the target application to get authorized.

Specifically, the process of controlling the unauthorized application in the target organization to get authorized processing is the same as the process in which the intermediate platform controls the target application to get authorized according to the generic credential, and the details are not repeated here.

It is to be noted that in this embodiment, the intermediate platform is introduced and used as an intermediate bridge through which the third-party organization authorizes the open platform to access services of the third-party organization. The intermediate platform interacts with the third-party organization based on the Oauth2.0 authorization protocol to acquire the generic credential. The intermediate platform interacts with the open platform based on the Oauth2.0 authorization protocol to make the generic credential valid, that is, multiple applications get authorized for the open platform. Thus, the problem of poor user experience caused by that a user needs to perform independent login authorization for each of applications of the third-party organization on the open platform to use the applications. In the case where the independence between different applications on the open platform is satisfied, the effect of batch authorization of multiple applications with one login is implemented, and thus the user experience is improved.

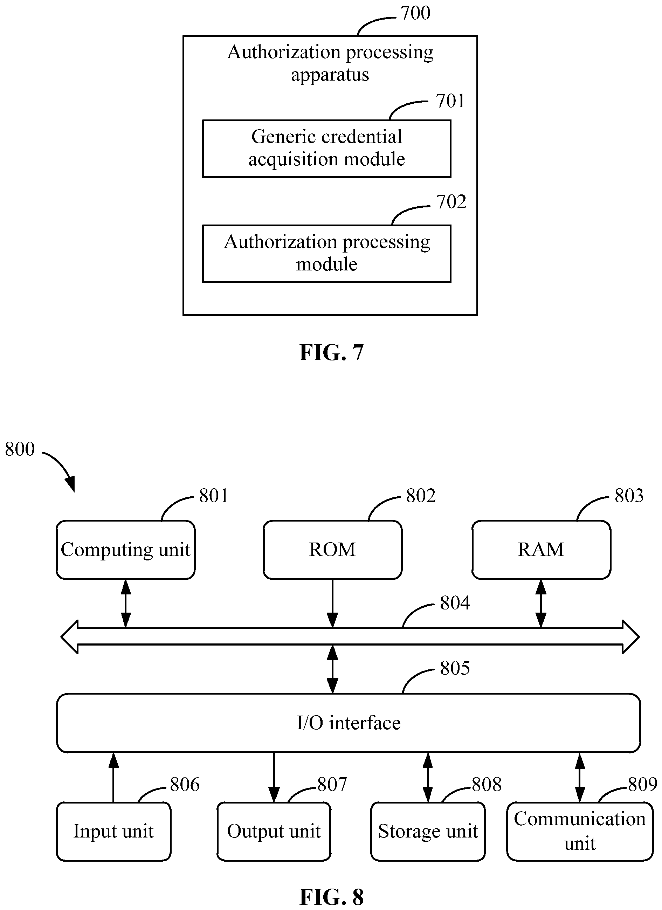

FIG. 7 is a diagram illustrating the structure of an authorization processing apparatus according to an embodiment of the present disclosure. This embodiment of the present disclosure is applicable to the case of how to perform the authorization processing, especially to the case of how to perform the authorization processing on the basis that the open platform supports the Oauth2.0 authorization protocol, so that the user can use part or even all of the applications developed by the third-party organization on the open platform after the user performs the login authorization once. This apparatus may be performed by the software and/or hardware, and the apparatus may perform the authorization processing method of any embodiment of the present disclosure. As shown in FIG. 7, this authorization processing apparatus includes a generic credential acquisition module 701 and an authorization processing module 702.

The generic credential acquisition module 701 is configured to acquire a generic credential of a target organization.

The authorization processing module 702 is configured to control at least two applications developed by the target organization on an open platform to get authorized according to the generic credential. The at least two applications include the target application.

In the technical scheme provided by this embodiment of the present disclosure, the intermediate platform interacts with the target organization to acquire the generic credential for accessing the target organization. Then, based on the generic credential, the open platform is authorized to access part or even all of the applications developed by the target organization on the open platform. In the preceding scheme, the generic credential is introduced to directly control multiple applications to get authorized for the open platform. The user does not need to fill in the username and password multiple times. Thus, the problem of poor user experience caused by that a user needs to perform independent login authorization for each of applications of the third-party organization on the open platform to use the applications. In the case where the independence between different applications on the open platform is satisfied, the effect of batch authorization of multiple applications with one login is implemented, and thus the user experience is improved.

For example, the authorization processing module 702 includes a first authorization unit, a selection unit and a second authorization unit.

The first authorization unit is configured to control the target application to get authorized according to the generic credential.

The selection unit is configured to select a to-be-authorized application from applications excluding the target application among at least two applications according to authorization configuration information of the target organization.

The second authorization unit is configured to control the to-be-authorized application to get authorized according to the generic credential.

For example, the first authorization unit is configured to send an authorization code of the target application to the open platform through an exclusive callback interface configured for the target application by the open platform; acquire a first authorization request sent by the open platform through a unified authorization interface, where the first authorization request includes the authorization code of the target application and an authorization parameter of the target application; and control the target application to get authorized according to the authorization code of the target application, the authorization parameter of the target application and the generic credential.

For example, the second authorization unit is configured to use the authorization code of the target application as an authorization code of the to-be-authorized application; send the authorization code of the to-be-authorized application to the open platform through the exclusive callback interface configured for the to-be-authorized application by the open platform; acquire a second authorization request sent by the open platform through the unified authorization interface, where the second authorization request includes the authorization code of the to-be-authorized application and the authorization parameter of the to-be-authorized application; and control the to-be-authorized application to get authorized according to the authorization code of the to-be-authorized application, the authorization parameter of the to-be-authorized application and the generic credential.

For example, the second authorization unit is further configured to determine authorization time according to valid time of the generic credential and a historical access record of the open platform; and control the to-be-authorized application to get authorized according to the authorization time and the generic credential.

For example, the authorization information includes an authorization code and an authorization parameter. The generic credential acquisition module 701 is configured to acquire, through the unified callback interface, the authorization code of the target application sent by the target organization; and send a third authorization request including the authorization code of the target application and the authorization parameter of the target application to the target organization through the unified authorization interface to instruct the target organization to generate the generic credential according to the authorization code of the target application and the authorization parameter of the target application and feed back the generic credential.

For example, the preceding apparatus further includes a selection module and an authorization processing module 702.

The selection module is configured to select a similar application from another organization according to the authorization configuration information of the target organization and/or the authorization configuration information of another organization.

The authorization processing module 702 is further configured to control the similar application to get authorized according to the generic credential.

In the technical scheme of the present disclosure, the acquisition, storage, and application of the related data (such as the authorization code of the application, the application identifier, and the authorization parameter of the application) of any application involved, the related data (such as the historical access record) of the open platform involved, the related data of the third-party organization involved (such as the target organization and other organizations), and the related data (such as the user identifier) of the user involved are in compliance with provisions of relevant laws and regulations, and do not violate public order and good customs.

According to the embodiments of the present disclosure, the present disclosure further provides an electronic device, a readable storage medium and a computer program product.

FIG. 8 is a block diagram of an exemplary electronic device 500 that may be configured to implement the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may further represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 8, the device 800 includes a computing unit 801. The computing unit 801 may perform various appropriate actions and processing according to a computer program stored in a read-only memory (ROM) 802 or a computer program loaded into a random-access memory (RAM) 803 from a storage unit 808. Various programs and data required for the operation of the electronic device 800 may also be stored in the RAM 803. The computing unit 801, the ROM 802 and the RAM 803 are connected to each other through a bus 804. An input/output (I/O) interface 805 is also connected to the bus 804.

Multiple components in the electronic device 800 are connected to the I/O interface 805. The multiple components include an input unit 806 such as a keyboard and a mouse, an output unit 807 such as various types of displays and speakers, the storage unit 808 such as a magnetic disk and an optical disk, and a communication unit 809 such as a network card, a modem and a wireless communication transceiver. The communication unit 809 allows the device 800 to exchange information/data with other devices over a computer network such as the Internet and/or various telecommunications networks.

The computing unit 801 may be various general-purpose and/or special-purpose processing components having processing and computing capabilities. Examples of the computing unit 801 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller and microcontroller. The computing unit 801 performs various methods and processing described above, such as the authorization processing method. For example, in some embodiments, the authorization processing method may be implemented as computer software programs tangibly contained in a machine-readable medium such as the storage unit 808. In some embodiments, part or all of computer programs may be loaded and/or installed on the electronic device 800 via the ROM 802 and/or the communication unit 809. When the computer program is loaded to the RAM 803 and executed by the computing unit 801, one or more steps of the preceding authorization processing method may be executed. Alternatively, in other embodiments, the computing unit 801 may be configured, in any other suitable manner (for example, by means of firmware), to perform the authorization processing method.

Herein various implementations of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various implementations may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for implementing the methods of the present disclosure may be compiled in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN) and the Internet.

The computing system may include clients and servers. The clients and servers are usually far away from each other and generally interact through the communication network. The relationship between the clients and the servers arises by virtue of computer programs running on respective computers and having a client-server relationship to each other. The server may be a cloud server, a server of a distributed system or a server combined with block chain.

It is to be understood that various forms of the preceding flows may be used with steps reordered, added, or removed. For example, the steps described in the present disclosure may be executed in parallel, in sequence or in a different order as long as the desired result of the technical scheme disclosed in the present disclosure is achieved. The execution sequence of these steps is not limited herein.

The scope of the present disclosure is not limited to the preceding implementations. It is to be understood by those skilled in the art that various modifications, combinations, subcombinations and substitutions may be made according to design requirements and other factors.

## Claims

1. An authorization processing method, applied to an intermediate platform and comprising:
acquiring (S101) a generic credential of a target organization, wherein the generic credential is generated according to authorization information of a target application, wherein the authorization information of the target application comprises an authorization code and an authorization parameter; and
controlling (S102) at least two applications developed by the target organization on an open platform to get authorized according to the generic credential, wherein the at least two applications comprise the target application;
**characterized in that**, acquiring (S101) the generic credential of the target organization comprises:
acquiring, through a unified callback interface, the authorization code of the target application sent by the target organization, wherein the authorization code corresponds to a user and is generated by the target organization that received an authorization code request including a target application identifier and a user identifier, and the authorization code request is sent by the open platform; and
sending a third authorization request comprising the authorization code of the target application and the authorization parameter of the target application to the target organization through a unified authorization interface to instruct the target organization to generate the generic credential according to the authorization code of the target application and the authorization parameter of the target application and feed back the generic credential; and
wherein controlling (S102) the at least two applications developed by the target organization on the open platform to get authorized according to the generic credential comprises:
sending the authorization code of the target application to the open platform through an exclusive callback interface configured for the target application by the open platform;
acquiring a first authorization request sent by the open platform through the unified authorization interface, wherein the first authorization request comprises the authorization code of the target application and the authorization parameter of the target application; and
extracting the authorization code of the target application and the authorization parameter of the target application from the first authorization request after the intermediate platform acquires the first authorization request, comparing a locally stored authorization parameter of the target application with the authorization parameter of the target application transmitted by the open platform and comparing a locally stored authorization code of the target application with the authorization code of the target application transmitted by the open platform, in a case wherein the locally stored authorization parameter of the target application is consistent with the authorization parameter of the target application transmitted by the open platform and the locally stored authorization code of the target application is consistent with the authorization code of the target application transmitted by the open platform, generating an access token of the target application according to a generic token, the target application identifier, the authorization code of the target application and the user identifier, and transmitting the access token of the target application to the open platform through the unified authorization interface to enable the open platform to access a service corresponding to the target application in the target organization based on the access token of the target application.

2. The method according to claim 1, wherein controlling the at least two applications developed by the target organization on the open platform to get authorized according to the generic credential further comprises:
selecting a to-be-authorized application from applications excluding the target application among the at least two applications according to authorization configuration information of the target organization; and
controlling the to-be-authorized application to get authorized according to the generic credential.

3. The method according to claim 2, wherein controlling the to-be-authorized application to get authorized according to the generic credential comprises:
using an authorization code of the target application as an authorization code of the to-be-authorized application;
sending the authorization code of the to-be-authorized application to the open platform through an exclusive callback interface configured for the to-be-authorized application by the open platform;
acquiring a second authorization request sent by the open platform through a unified authorization interface, wherein the second authorization request comprises the authorization code of the to-be-authorized application and an authorization parameter of the to-be-authorized application; and
controlling the to-be-authorized application to get authorized according to the authorization code of the to-be-authorized application, the authorization parameter of the to-be-authorized application and the generic credential.

4. The method according to claim 2, wherein controlling the to-be-authorized application to get authorized according to the generic credential comprises:
determining authorization time in which the to-be-authorized application gets authorized according to valid time of the generic credential and a historical access record of the open platform; and
controlling the to-be-authorized application to get authorized according to the authorization time and the generic credential.

5. The method according to any one of claims 1 to 4, after acquiring the generic credential of the target organization, the method further comprising:
selecting a similar application from another organization according to at least one of authorization configuration information of the target organization or authorization configuration information of the another organization; and
controlling the similar application to get authorized according to the generic credential.

6. An authorization processing apparatus (700), applied to an intermediate platform and comprising:
a generic credential acquisition module (701), which is configured to acquire a generic credential of a target organization, wherein the generic credential is generated according to authorization information of a target application, wherein the authorization information of the target application comprises an authorization code and an authorization parameter; and
an authorization processing module (702), which is configured to control at least two applications developed by the target organization on an open platform to get authorized according to the generic credential, wherein the at least two applications comprise the target application;
**characterized in that**, the generic credential acquisition module (701) is configured to:
acquire, through a unified callback interface, the authorization code of the target application sent by the target organization, wherein the authorization code corresponds to a user and is generated by the target organization that received an authorization code request including a target application identifier and a user identifier, and the authorization code request is sent by the open platform; and
send a third authorization request comprising the authorization code of the target application and the authorization parameter of the target application to the target organization through a unified authorization interface to instruct the target organization to generate the generic credential according to the authorization code of the target application and the authorization parameter of the target application and feed back the generic credential; and
wherein the authorization processing module (702) is configured to:
send the authorization code of the target application to the open platform through an exclusive callback interface configured for the target application by the open platform;
acquire a first authorization request sent by the open platform through the unified authorization interface, wherein the first authorization request comprises the authorization code of the target application and the authorization parameter of the target application; and
extract the authorization code of the target application and the authorization parameter of the target application from the first authorization request after the intermediate platform acquires the first authorization request, compare a locally stored authorization parameter of the target application with the authorization parameter of the target application transmitted by the open platform and compare a locally stored authorization code of the target application with the authorization code of the target application transmitted by the open platform, in a case wherein the locally stored authorization parameter of the target application is consistent with the authorization parameter of the target application transmitted by the open platform and the locally stored authorization code of the target application is consistent with the authorization code of the target application transmitted by the open platform, generate an access token of the target application according to a generic token, the target application identifier, the authorization code of the target application and the user identifier, and transmit the access token of the target application to the open platform through the unified authorization interface to enable the open platform to access a service corresponding to the target application in the target organization based on the access token of the target application.

7. The apparatus according to claim 6, wherein the authorization processing module further comprises:
a selection unit, which is configured to select a to-be-authorized application from applications excluding the target application among the at least two applications according to authorization configuration information of the target organization; and
a second authorization unit, which is configured to control the to-be-authorized application to get authorized according to the generic credential.

8. The apparatus according to claim 7, wherein the second authorization unit is configured to:
use an authorization code of the target application as an authorization code of the to-be-authorized application;
send the authorization code of the to-be-authorized application to the open platform through an exclusive callback interface configured for the to-be-authorized application by the open platform;
acquire a second authorization request sent by the open platform through a unified authorization interface, wherein the second authorization request comprises the authorization code of the to-be-authorized application and an authorization parameter of the to-be-authorized application; and
control the to-be-authorized application to get authorized according to the authorization code of the to-be-authorized application, the authorization parameter of the to-be-authorized application and the generic credential.

9. The apparatus according to claim 7, wherein the second authorization unit is further configured to:
determine authorization time in which the to-be-authorized application gets authorized according to valid time of the generic credential and a historical access record of the open platform; and
control the to-be-authorized application to get authorized according to the authorization time and the generic credential.

10. A non-transitory computer-readable storage medium storing computer instructions, **characterized in that** the computer instructions are configured to cause a computer to execute the authorization processing method according to any one of claims 1 to 5.

11. A computer program product, **characterized by** comprising a computer program, wherein the computer program, when executed by a processor, implements the authorization processing method according to any one of claims 1 to 5.

## Patentansprüche

1. Autorisierungsverarbeitungsverfahren, das auf eine Zwischenplattform angewendet wird und umfasst:
Erfassen (S101) eines allgemeinen Berechtigungsnachweises einer Zielorganisation, wobei der allgemeine Berechtigungsnachweis gemäß Autorisierungsinformationen einer Zielanwendung erzeugt wird, wobei die Autorisierungsinformationen der Zielanwendung einen Autorisierungscode und einen Autorisierungsparameter umfassen; und
Steuern (S102) von mindestens zwei Anwendungen, die durch die Zielorganisation auf einer offenen Plattform entwickelt wurden, um gemäß dem allgemeinen Berechtigungsnachweis autorisiert zu werden, wobei die mindestens zwei Anwendungen die Zielanwendung umfassen;
**dadurch gekennzeichnet, dass** das Erfassen (S101) des allgemeinen Berechtigungsnachweises der Zielorganisation umfasst:
Erfassen, über eine vereinheitlichte Rückrufschnittstelle, des durch die Zielorganisation gesendeten Autorisierungscodes der Zielanwendung, wobei der Autorisierungscode einem Benutzer entspricht und durch die Zielorganisation erzeugt wird, die eine Autorisierungscodeanforderung einschließlich einer Zielanwendungskennung und einer Benutzerkennung empfangen hat, und die Autorisierungscodeanforderung durch die offene Plattform gesendet wird; und
Senden einer dritten Autorisierungsanforderung, die den Autorisierungscode der Zielanwendung und den Autorisierungsparameter der Zielanwendung umfasst, über eine vereinheitlichte Autorisierungsschnittstelle an die Zielorganisation, um die Zielorganisation anzuweisen, den allgemeinen Berechtigungsnachweis gemäß dem Autorisierungscode der Zielanwendung und dem Autorisierungsparameter der Zielanwendung zu erzeugen und den allgemeinen Berechtigungsnachweis zurückzumelden; und
wobei das Steuern (S 102) der mindestens zwei durch die Zielorganisation auf der offenen Plattform entwickelten Anwendungen, um gemäß dem allgemeinen Berechtigungsnachweis autorisiert zu werden, umfasst:
Senden des Autorisierungscodes der Zielanwendung an die offene Plattform über eine exklusive Rückrufschnittstelle, die durch die offene Plattform für die Zielanwendung konfiguriert wurde;
Erfassen einer ersten Autorisierungsanforderung, die durch die offene Plattform über die vereinheitlichte Autorisierungsschnittstelle gesendet wurde, wobei die erste Autorisierungsanforderung den Autorisierungscode der Zielanwendung und den Autorisierungsparameter der Zielanwendung umfasst; und
Extrahieren des Autorisierungscodes der Zielanwendung und des Autorisierungsparameters der Zielanwendung aus der ersten Autorisierungsanforderung, nachdem die Zwischenplattform die erste Autorisierungsanforderung erfasst hat, Vergleichen eines lokal gespeicherten Autorisierungsparameters der Zielanwendung mit dem durch die offene Plattform übertragenen Autorisierungsparameter der Zielanwendung und Vergleichen eines lokal gespeicherten Autorisierungscodes der Zielanwendung mit dem durch die offene Plattform übertragenen Autorisierungscode der Zielanwendung, in einem Fall, in dem der lokal gespeicherte Autorisierungsparameter der Zielanwendung mit dem durch die offene Plattform übertragenen Autorisierungsparameter der Zielanwendung übereinstimmt und der lokal gespeicherte Autorisierungscode der Zielanwendung mit dem durch die offene Plattform übertragenen Autorisierungscode der Zielanwendung übereinstimmt, Erzeugen eines Zugriffstokens der Zielanwendung gemäß einem allgemeinen Token, der Zielanwendungskennung, dem Autorisierungscode der Zielanwendung und der Benutzerkennung und Übertragen des Zugriffstokens der Zielanwendung an die offene Plattform über die vereinheitlichte Autorisierungsschnittstelle, um der offenen Plattform zu ermöglichen, auf der Grundlage des Zugriffstokens der Zielanwendung auf einen Dienst zuzugreifen, der der Zielanwendung in der Zielorganisation entspricht.

2. Verfahren nach Anspruch 1, wobei das Steuern der mindestens zwei durch die Zielorganisation auf der offenen Plattform entwickelten Anwendungen, um gemäß dem allgemeinen Berechtigungsnachweis autorisiert zu werden, ferner umfasst:
Auswählen einer zu autorisierenden Anwendung aus Anwendungen unter Ausschluss der Zielanwendung unter den mindestens zwei Anwendungen gemäß den Autorisierungskonfigurationsinformationen der Zielorganisation; und
Steuern der zu autorisierenden Anwendung, um gemäß dem allgemeinen Berechtigungsnachweis autorisiert zu werden.

3. Verfahren nach Anspruch 2, wobei das Steuern der zu autorisierenden Anwendung, um gemäß dem allgemeinen Berechtigungsnachweis autorisiert zu werden, umfasst:
Verwenden eines Autorisierungscodes der Zielanwendung als Autorisierungscode der zu autorisierenden Anwendung;
Senden des Autorisierungscodes der zu autorisierenden Anwendung an die offene Plattform über eine exklusive Rückrufschnittstelle, die durch die offene Plattform für die zu autorisierende Anwendung konfiguriert wurde;
Erfassen einer zweiten Autorisierungsanforderung, die durch die offene Plattform über eine vereinheitlichte Autorisierungsschnittstelle gesendet wurde, wobei die zweite Autorisierungsanforderung den Autorisierungscode der zu autorisierenden Anwendung und einen Autorisierungsparameter der zu autorisierenden Anwendung umfasst; und
Steuern der zu autorisierenden Anwendung, um gemäß dem Autorisierungscode der zu autorisierenden Anwendung, dem Autorisierungsparameter der zu autorisierenden Anwendung und dem allgemeinen Berechtigungsnachweis autorisiert zu werden.

4. Verfahren nach Anspruch 2, wobei das Steuern der zu autorisierenden Anwendung, um gemäß dem allgemeinen Berechtigungsnachweis autorisiert zu werden, umfasst:
Ermitteln der Autorisierungszeit, in der die zu autorisierende Anwendung gemäß einer Gültigkeitszeit des allgemeinen Berechtigungsnachweises und einem historischen Zugriffsdatensatz der offenen Plattform autorisiert wird; und
Steuern der zu autorisierenden Anwendung, um gemäß der Autorisierungszeit und dem allgemeinen Berechtigungsnachweis autorisiert zu werden.

5. Verfahren nach einem der Ansprüche 1 bis 4, wobei das Verfahren nach dem Erfassen des allgemeinen Berechtigungsnachweise der Zielorganisation ferner umfasst:
Auswählen einer ähnlichen Anwendung von einer weiteren Organisation gemäß mindestens einem aus Autorisierungskonfigurationsinformationen der Zielorganisation oder Autorisierungskonfigurationsinformationen der weiteren Organisation; und
Steuern der ähnlichen Anwendung, um gemäß dem allgemeinen Berechtigungsnachweis autorisiert zu werden.

6. Autorisierungsverarbeitungsvorrichtung (700), die auf eine Zwischenplattform angewendet wird und umfasst:
ein Erfassungsmodul (701) für allgemeine Berechtigungsnachweise, das zum Erfassen eines allgemeinen Berechtigungsnachweises einer Zielorganisation konfiguriert ist, wobei der allgemeine Berechtigungsnachweis gemäß Autorisierungsinformationen einer Zielanwendung erzeugt wird, wobei die Autorisierungsinformationen der Zielanwendung einen Autorisierungscode und einen Autorisierungsparameter umfassen; und
ein Autorisierungsverarbeitungsmodul (702), das zum Steuern von mindestens zwei Anwendungen konfiguriert ist, die durch die Zielorganisation auf einer offenen Plattform entwickelt wurden, um gemäß dem allgemeinen Berechtigungsnachweis autorisiert zu werden, wobei die mindestens zwei Anwendungen die Zielanwendung umfassen;
**dadurch gekennzeichnet, dass** das Erfassungsmodul (701) für allgemeine Berechtigungsnachweise konfiguriert ist zum:
Erfassen, über eine vereinheitlichte Rückrufschnittstelle, des durch die Zielorganisation gesendeten Autorisierungscodes der Zielanwendung, wobei der Autorisierungscode einem Benutzer entspricht und durch die Zielorganisation erzeugt wird, die eine Autorisierungscodeanforderung einschließlich einer Zielanwendungskennung und einer Benutzerkennung empfangen hat, und die Autorisierungscodeanforderung durch die offene Plattform gesendet wird; und
Senden einer dritten Autorisierungsanforderung, die den Autorisierungscode der Zielanwendung und den Autorisierungsparameter der Zielanwendung umfasst, über eine vereinheitlichte Autorisierungsschnittstelle an die Zielorganisation, um die Zielorganisation anzuweisen, den allgemeinen Berechtigungsnachweis gemäß dem Autorisierungscode der Zielanwendung und dem Autorisierungsparameter der Zielanwendung zu erzeugen und den allgemeinen Berechtigungsnachweise zurückzumelden; und
wobei das Autorisierungsverarbeitungsmodul (702) konfiguriert ist zum:
Senden des Autorisierungscodes der Zielanwendung an die offene Plattform über eine exklusive Rückrufschnittstelle, die durch die offene Plattform für die Zielanwendung konfiguriert wurde;
Erfassen einer ersten Autorisierungsanforderung, die durch die offene Plattform über die vereinheitlichte Autorisierungsschnittstelle gesendet wurde, wobei die erste Autorisierungsanforderung den Autorisierungscode der Zielanwendung und den Autorisierungsparameter der Zielanwendung umfasst; und
Extrahieren des Autorisierungscodes der Zielanwendung und des Autorisierungsparameters der Zielanwendung aus der ersten Autorisierungsanforderung, nachdem die Zwischenplattform die erste Autorisierungsanforderung erfasst hat, Vergleichen eines lokal gespeicherten Autorisierungsparameters der Zielanwendung mit dem durch die offene Plattform übertragenen Autorisierungsparameter der Zielanwendung und Vergleichen eines lokal gespeicherten Autorisierungscodes der Zielanwendung mit dem durch die offene Plattform übertragenen Autorisierungscode der Zielanwendung, in einem Fall, in dem der lokal gespeicherte Autorisierungsparameter der Zielanwendung mit dem durch die offene Plattform übertragenen Autorisierungsparameter der Zielanwendung übereinstimmt und der lokal gespeicherte Autorisierungscode der Zielanwendung mit dem durch die offene Plattform übertragenen Autorisierungscode der Zielanwendung übereinstimmt, Erzeugen eines Zugriffstokens der Zielanwendung gemäß einem allgemeinen Token, der Zielanwendungskennung, dem Autorisierungscode der Zielanwendung und der Benutzerkennung und Übertragen des Zugriffstokens der Zielanwendung an die offene Plattform über die vereinheitlichte Autorisierungsschnittstelle, um der offenen Plattform zu ermöglichen, auf der Grundlage des Zugriffstokens der Zielanwendung auf einen Dienst zuzugreifen, der der Zielanwendung in der Zielorganisation entspricht.

7. Vorrichtung nach Anspruch 6, wobei das Autorisierungsverarbeitungsmodul ferner umfasst:
eine Auswahleinheit, die zum Auswählen einer zu autorisierenden Anwendung aus Anwendungen unter Ausschluss der Zielanwendung unter den mindestens zwei Anwendungen gemäß den Autorisierungskonfigurationsinformationen der Zielorganisation konfiguriert ist; und
eine zweite Autorisierungseinheit, die zum Steuern der zu autorisierenden Anwendung konfiguriert ist, um gemäß dem allgemeinen Berechtigungsnachweis autorisiert zu werden.

8. Vorrichtung nach Anspruch 7, wobei die zweite Autorisierungseinheit konfiguriert ist zum: Verwenden eines Autorisierungscodes der Zielanwendung als Autorisierungscode der zu autorisierenden Anwendung;
Senden des Autorisierungscodes der zu autorisierenden Anwendung an die offene Plattform über eine exklusive Rückrufschnittstelle, die durch die offene Plattform für die zu autorisierende Anwendung konfiguriert wurde;
Erfassen einer zweiten Autorisierungsanforderung, die durch die offene Plattform über eine vereinheitlichte Autorisierungsschnittstelle gesendet wurde, wobei die zweite Autorisierungsanforderung den Autorisierungscode der zu autorisierenden Anwendung und einen Autorisierungsparameter der zu autorisierenden Anwendung umfasst; und
Steuern der zu autorisierenden Anwendung, um gemäß dem Autorisierungscode der zu autorisierenden Anwendung, dem Autorisierungsparameter der zu autorisierenden Anwendung und dem allgemeinen Berechtigungsnachweis autorisiert zu werden.

9. Vorrichtung nach Anspruch 7, wobei die zweite Autorisierungseinheit ferner konfiguriert ist zum:
Ermitteln der Autorisierungszeit, in der die zu autorisierende Anwendung gemäß einer Gültigkeitszeit des allgemeinen Berechtigungsnachweises und einem historischen Zugriffsdatensatz der offenen Plattform autorisiert wird; und
Steuern der zu autorisierenden Anwendung, um gemäß der Autorisierungszeit und dem allgemeinen Berechtigungsnachweis autorisiert zu werden.

10. Nichtflüchtiges computerlesbares Speichermedium, das Computeranweisungen speichert, **dadurch gekennzeichnet, dass** die Computeranweisungen konfiguriert sind, um einen Computer zu veranlassen, das Autorisierungsverarbeitungsverfahren nach einem der Ansprüche 1 bis 5 auszuführen.

11. Computerprogrammprodukt, **dadurch gekennzeichnet, dass** es ein Computerprogramm umfasst, wobei das Computerprogramm bei Ausführung durch einen Prozessor das Autorisierungsverarbeitungsverfahren nach einem der Ansprüche 1 bis 5 implementiert.

## Revendications

1. Procédé de traitement d'autorisation, appliqué à une plateforme intermédiaire et comprenant :
l'acquisition (S 101) d'un justificatif d'identité générique d'une organisation cible, dans lequel le justificatif d'identité générique est généré conformément à des informations d'autorisation d'une application cible, dans lequel les informations d'autorisation de l'application cible comprennent un code d'autorisation et un paramètre d'autorisation ; et
la commande (S102) d'au moins deux applications développées par l'organisation cible sur une plateforme ouverte pour obtenir une autorisation conformément au justificatif d'identité générique, dans lequel les au moins deux applications comprennent l'application cible ;
**caractérisé en ce que** l'acquisition (5101) du justificatif d'identité générique de l'organisation cible comprend :
l'acquisition, par l'intermédiaire d'une interface de rappel unifiée, du code d'autorisation de l'application cible envoyé par l'organisation cible, dans lequel le code d'autorisation correspond à un utilisateur et est généré par l'organisation cible qui a reçu une demande de code d'autorisation comprenant un identifiant d'application cible et un identifiant d'utilisateur, et la demande de code d'autorisation est envoyée par la plateforme ouverte ; et
l'envoi d'une troisième demande d'autorisation comprenant le code d'autorisation de l'application cible et le paramètre d'autorisation de l'application cible à l'organisation cible par l'intermédiaire d'une interface d'autorisation unifiée pour donner comme instruction à l'organisation cible de générer le justificatif d'identité générique conformément au code d'autorisation de l'application cible et au paramètre d'autorisation de l'application cible et de renvoyer le justificatif d'identité générique ; et
dans lequel la commande (S 102) des au moins deux applications développées par l'organisation cible sur la plateforme ouverte pour obtenir une autorisation conformément au justificatif d'identité générique comprend :
l'envoi du code d'autorisation de l'application cible à la plateforme ouverte par l'intermédiaire d'une interface de rappel exclusive configurée pour l'application cible par la plateforme ouverte ;
l'acquisition d'une première demande d'autorisation envoyée par la plateforme ouverte par l'intermédiaire de l'interface d'autorisation unifiée, dans lequel la première demande d'autorisation comprend le code d'autorisation de l'application cible et le paramètre d'autorisation de l'application cible ; et
l'extraction du code d'autorisation de l'application cible et du paramètre d'autorisation de l'application cible à partir de la première demande d'autorisation après que la plateforme intermédiaire a acquis la première demande d'autorisation, la comparaison d'un paramètre d'autorisation stocké localement de l'application cible au paramètre d'autorisation de l' application cible transmis par la plateforme ouverte et la comparaison d'un code d'autorisation stocké localement de l'application cible au code d'autorisation de l'application cible transmis par la plateforme ouverte, dans le cas où le paramètre d'autorisation stocké localement de l'application cible est cohérent avec le paramètre d'autorisation de l'application cible transmis par la plateforme ouverte et le code d'autorisation stocké localement de l'application cible est cohérent avec le code d'autorisation de l'application cible transmis par la plateforme ouverte, la génération d'un jeton d'accès de l'application cible conformément à un jeton générique, à l'identifiant d'application cible, au code d'autorisation de l'application cible et à l'identifiant d'utilisateur et la transmission du jeton d'accès de l'application cible à la plateforme ouverte par l'intermédiaire de l'interface d'autorisation unifiée pour permettre à la plateforme ouverte d'accéder à un service correspondant à l'application cible dans l'organisation cible en fonction du jeton d'accès de l'application cible.

2. Procédé selon la revendication 1, dans lequel la commande des au moins deux applications développées par l'organisation cible sur la plateforme ouverte pour obtenir une autorisation conformément au justificatif d'identité générique comprend en outre :
la sélection d'une application à autoriser parmi les applications excluant l'application cible parmi les au moins deux applications conformément à des informations de configuration d'autorisation de l'organisation cible ; et
la commande de l'application à autoriser pour obtenir une autorisation conformément au justificatif d'identité générique.

3. Procédé selon la revendication 2, dans lequel la commande de l'application à autoriser pour obtenir une autorisation conformément au justificatif d'identité générique comprend :
l'utilisation d'un code d'autorisation de l'application cible comme code d'autorisation de l'application à autoriser ;
l'envoi du code d'autorisation de l'application à autoriser à la plateforme ouverte par l'intermédiaire d'une interface de rappel exclusive configurée pour l'application à autoriser par la plateforme ouverte ;
l'acquisition d'une deuxième demande d'autorisation envoyée par la plateforme ouverte par l'intermédiaire d'une interface d'autorisation unifiée, dans lequel la deuxième demande d'autorisation comprend le code d'autorisation de l'application à autoriser et un paramètre d'autorisation de l'application à autoriser ; et
la commande de l'application à autoriser pour obtenir une autorisation conformément au code d'autorisation de l'application à autoriser, au paramètre d'autorisation de l'application à autoriser et au justificatif d'identité générique.

4. Procédé selon la revendication 2, dans lequel la commande de l'application à autoriser pour obtenir une autorisation conformément au justificatif d'identité générique comprend :
la détermination du délai d'autorisation pendant lequel l'application à autoriser obtient une autorisation conformément au délai de validité du justificatif d'identité générique et à un enregistrement d'accès historique de la plateforme ouverte ; et
la commande de l'application à autoriser pour obtenir une autorisation conformément au délai d'autorisation et au justificatif d'identité générique.

5. Procédé selon l'une quelconque des revendications 1 à 4, après l'acquisition du justificatif d'identité générique de l'organisation cible, le procédé comprenant en outre :
la sélection d'une application similaire provenant d'une autre organisation conformément à au moins des informations parmi des informations de configuration d'autorisation de l'organisation cible ou des informations de configuration d'autorisation de l'autre organisation ; et
la commande de l'application similaire pour obtenir une autorisation conformément au justificatif d'identité générique.

6. Appareil de traitement d'autorisation (700), appliqué à une plateforme intermédiaire et comprenant :
un module d'acquisition de justificatif d'identité générique (701), qui est configuré pour acquérir un justificatif d'identité générique d'une organisation cible, dans lequel le justificatif d'identité générique est généré conformément à des informations d'autorisation d'une application cible, dans lequel les informations d'autorisation de l'application cible comprennent un code d'autorisation et un paramètre d'autorisation ; et
un module de traitement d'autorisation (702), qui est configuré pour commander au moins deux applications développées par l'organisation cible sur une plateforme ouverte afin d'obtenir une autorisation conformément au justificatif d'identité générique, dans lequel les au moins deux applications comprennent l'application cible ;
**caractérisé en ce que** le module d'acquisition de justificatif d'identité générique (701) est configuré pour :
acquérir, par l'intermédiaire d'une interface de rappel unifiée, le code d'autorisation de l'application cible envoyé par l'organisation cible, dans lequel le code d'autorisation correspond à un utilisateur et est généré par l'organisation cible qui a reçu une demande de code d'autorisation comprenant un identifiant d'application cible et un identifiant d'utilisateur, et la demande de code d'autorisation est envoyée par la plateforme ouverte ; et
envoyer une troisième demande d'autorisation comprenant le code d'autorisation de l'application cible et le paramètre d'autorisation de l'application cible à l'organisation cible par l'intermédiaire d'une interface d'autorisation unifiée pour donner comme instruction à l'organisation cible de générer le justificatif d'identité générique conformément au code d'autorisation de l'application cible et au paramètre d'autorisation de l'application cible et de renvoyer le justificatif d'identité générique ; et
dans lequel le module de traitement d'autorisation (702) est configuré pour :
envoyer le code d'autorisation de l'application cible à la plateforme ouverte par l'intermédiaire d'une interface de rappel exclusive configurée pour l'application cible par la plateforme ouverte ;
acquérir une première demande d'autorisation envoyée par la plateforme ouverte par l'intermédiaire de l'interface d'autorisation unifiée, dans lequel la première demande d'autorisation comprend le code d'autorisation de l'application cible et le paramètre d'autorisation de l'application cible ; et
extraire le code d'autorisation de l'application cible et le paramètre d'autorisation de l'application cible à partir de la première demande d'autorisation après que la plateforme intermédiaire a acquis la première demande d'autorisation, comparer un paramètre d'autorisation stocké localement de l'application cible au paramètre d'autorisation de l'application cible transmis par la plateforme ouverte et comparer un code d'autorisation stocké localement de l'application cible au code d'autorisation de l'application cible transmis par la plateforme ouverte, dans le cas où le paramètre d'autorisation stocké localement de l'application cible est cohérent avec le paramètre d'autorisation de l'application cible transmis par la plateforme ouverte et le code d'autorisation stocké localement de l'application cible est cohérent avec le code d'autorisation de l'application cible transmis par la plateforme ouverte, générer un jeton d'accès de l'application cible conformément à un jeton générique, à l'identifiant d'application cible, au code d'autorisation de l'application cible et à l'identifiant d'utilisateur et transmettre le jeton d'accès de l'application cible à la plateforme ouverte par l'intermédiaire de l'interface d'autorisation unifiée pour permettre à la plateforme ouverte d'accéder à un service correspondant à l'application cible dans l'organisation cible en fonction du jeton d'accès de l'application cible.

7. Appareil selon la revendication 6, dans lequel le module de traitement d'autorisation comprend en outre :
une unité de sélection, qui est configurée pour sélectionner une application à autoriser parmi des applications excluant l'application cible parmi les au moins deux applications conformément à des informations de configuration d'autorisation de l'organisation cible ; et
une seconde unité d'autorisation, qui est configurée pour commander l'application à autoriser pour obtenir une autorisation conformément au justificatif d'identité générique.

8. Appareil selon la revendication 7, dans lequel la seconde unité d'autorisation est configurée pour :
utiliser un code d'autorisation de l'application cible comme code d'autorisation de l'application à autoriser ;
envoyer le code d'autorisation de l'application à autoriser à la plateforme ouverte par l'intermédiaire d'une interface de rappel exclusive configurée pour l'application à autoriser par la plateforme ouverte ;
acquérir une deuxième demande d'autorisation envoyée par la plateforme ouverte par l'intermédiaire d'une interface d'autorisation unifiée, dans lequel la deuxième demande d'autorisation comprend le code d'autorisation de l'application à autoriser et un paramètre d'autorisation de l'application à autoriser ; et
commander l'application à autoriser pour obtenir une autorisation conformément au code d'autorisation de l'application à autoriser, au paramètre d'autorisation de l'application à autoriser et au justificatif d'identité générique.

9. Appareil selon la revendication 7, dans lequel la seconde unité d'autorisation est en outre configurée pour :
déterminer le délai d'autorisation pendant lequel l'application à autoriser obtient une autorisation conformément au délai de validité du justificatif d'identité générique et à un enregistrement d'accès historique de la plateforme ouverte ; et
commander l'application à autoriser pour obtenir une autorisation conformément au délai d'autorisation et au justificatif d'identité générique.

10. Support de stockage non transitoire lisible par ordinateur stockant des instructions informatiques, **caractérisé en ce que** les instructions informatiques sont configurées pour amener un ordinateur à exécuter le procédé de traitement d'autorisation selon l'une quelconque des revendications 1 à 5.

11. Produit-programme informatique, **caractérisé en ce qu'**il comprend un programme informatique, dans lequel le programme informatique, lorsqu'il est exécuté par un processeur, met en oeuvre le procédé de traitement d'autorisation selon l'une quelconque des revendications 1 à 5.
